# EUROPEAN PATENT SPECIFICATION

(11) **EP 3 015 400 B1**
(45) Date of publication and mention of the grant of the patent: **09.08.2017**
(21) Application number: 14190478.9
(22) Date of filing: 27.10.2014
(51) Int. Cl.: B65G 1/02, B65G 1/04

(54) **A storage assembly for bulk bags**
Aufbewahrungseinheit für große Transporttaschen
Ensemble de stockage pour sacs de vrac

(43) Date of publication of application: 04.05.2016
(73) Proprietor: INTRION NV, 1654 Huizingen (BE)
(72) Inventor: Paulussen, Gerard, 1755 Gooik (BE)
(74) Representative: Plas, Axel Ivo Michel

(56) References cited:
- EP-A1- 1 801 025
- WO-A1-97/21616
- WO-A1-2014/138390
- US-A1- 2013 020 272

## Description

### Field of the Invention

The present invention generally relates to a storage assembly for bulk bags, more specifically a storage assembly comprising at least one storage rack and a plurality of overhead frames, with a plurality of storage compartments comprising a support configured to support an overhead frame from which a bulk bag is suspended.

### Background of the Invention

A bulk bag or flexible intermediate bulk container or FIBC or big bag, is an industrial container. These bulk bags are for example made of flexible fabric for storing and transporting for example dry, flowable products, such as sand, grain, fertilizer, granules of plastic, etc. Bulk bags can for example be made of thick woven polyethylene or polypropylene, either coated or uncoated. The dimensions of such bulk bags can for example be in the range of 80cm to 150cm, for example 110 cms in diameter and in the range of 80cm to 250cm, for example 100 cm up to 200 cm. Such bulk bags, when filled are capable of carrying large weights, such as for example 1000 kg or more, while the weight of the bulk bag itself is comparatively marginal. As shown for example in FR2643887A1 these bulk bags generally comprise handles at their top side. These handles are used for suspension of the bulk bag during a filling or discharge operation at a filling or discharge station. Often the bulk bags comprise a discharge chute at their bottom that is closed during filling and storage operations but can be opened during a discharge operation at a discharge station.

The bulk bags are normally hung at their handles at a filling station during a filling operation, as for example known from US2006196578 or. After the filling operation has completed, the handles from the bulk bag are released from the filling station and the bulk bag is placed on top of a pallet in order to allow for handling during a transport and storage operation. The pallet comprising the bulk bag is generally stored on warehouse racks. Such a high-rise warehouse comprising racks for storing pallets is for example known from WO97/21616 and represents the closest state of the art. In preparation of a discharge operation the pallet comprising the desired bulk bag is retrieved from the warehouse and transported to a discharge station. At the discharge station the bulk bag must be removed from the pallet again and hung at its handles in order to allow for discharge of the bulk goods it contains via the opening of a discharge chute at the bottom of the bulk bag, such as for example known from US2005199650 or US5788449.

Due to storage of the bulk bags on pallets, the bulk bags expand sideways under influence of gravity acting on the bulk goods. Because of this, the storage compartments of the racks in the warehouse must be dimensioned to cope with this expansion leading to an increase in required floor space. Additionally the stability of the bulk bag on the pallet during storage and transport is not optimal, especially when a discharge chute is provided at the bottom of the bulk bag. Furthermore during filling and discharge operations the bag needs to be hung at its handles, while during storage it needs to be positioned on a pallet. This leads to corresponding transfer operations that clearly reduces the efficiency and throughput of the warehouse system.

A system is known from FR2643887A1 that provides an alternative way of storing the bulk bags in suspended state instead of on pallets. Such a storage assembly comprises a modular storage rack. The modular storage rack comprises a plurality of storage compartments. These storage compartments are formed by a support, in the form of a plurality of bars of which a plurality of vertically extending bars at the corners of the storage compartment support an overhead frame from which a bulk bag is suspended. As shown the bulk bag comprises a plurality of handles for overhead suspension. The overhead frame comprises a corresponding plurality of handle attachments configured to releasably connect to the handles of the bulk bag during overhead suspension. However it is clear that when such a storage rack comprises a an upper storage compartment being mounted on top of the lower storage compartment, the overhead frame and its associated bulk bag of the lower storage compartment can only be removed after removal of all upper storage compartments as these are supported directly on the overhead frame of the lower storage compartment. Such a storage assembly thus has the drawback of introducing a reduced flexibility when compared with a the above mentioned storage rack making use of pallet stored bulk bags.

There thus still exists a need for a storage assembly for bulk bags with an increased flexibility without compromising requirements for floor space, stability and efficiency.

### Summary of the Invention

According to a first aspect of the invention there is provided storage assembly comprising at least one storage rack and a plurality of overhead frames, said storage rack comprising a plurality of storage compartments, each of these storage compartments comprising a support configured to support an overhead frame from which a bulk bag is suspended, said bulk bag comprising a plurality of handles for overhead suspension, said overhead frame comprising a corresponding plurality of handle attachments configured to releasably connect to the handles of the bulk bag during overhead suspension;
said plurality of storage compartments comprising at least one lower storage compartment and upper storage compartment, the upper storage compartment being mounted on top of the lower storage compartment,
said lower storage compartment being configured to allow input and/or output of the overhead frame from which the bulk bag is suspended through a front side of the lower storage compartment,
wherein the storage rack comprises for each storage compartment at least two side members extending along a height direction of the storage rack and positioned at both lateral sides of the storage compartment when viewed along a longitudinal direction of the storage rack, the storage compartment extending in between its lateral sides from the front side to the back side along a transversal direction transversal to the height direction and the longitudinal direction,
said lower storage compartment is configured to allow input and/or output, along the transversal direction, of the overhead frame from which the bulk bag is suspended, and
wherein the support comprises at least two side support members respectively attached to both lateral sides and configured such that the distance between both side support members along the longitudinal direction is smaller than the length of the overhead frame along the longitudinal direction when stored in the storage compartment, and
wherein the at least two side support members of the lower storage compartment are positioned such that there is a predetermined clearance between the overhead frame and the upper storage compartment when the overhead frame is stored in the lower storage compartment, and
wherein the predetermined clearance comprises a predetermined clearance along the height direction and/or the longitudinal direction between the overhead frame and the lateral sides of the upper storage compartment, and
wherein the lateral sides of the upper storage compartment are directly connected to the respective lateral sides of the lower storage compartment.

In this way there is realised a reduction of the required floor space as, because of the suspended storage, there is no expansion of the bulk bags. As such, a reduction in the floor space required for each of the storage compartments is possible and thus the overall storage assembly can be realised. The suspended storage further also reduces the risk of an instable arrangement of the bulk bag. Additionally the use of the overhead frame for suspension of the bulk bag increases efficiency as there is no need for transfer operations to and from pallets. The bulk bag can remain in its suspended state from the overhead frame during all operations such as storage, transport, filling, discharge, etc. Finally the ability to input or output the overhead frame in a lower storage compartment without the necessity to manipulate any of the upper storage compartments mounted on top of the lower storage compartment allows for an increased flexibility with respect to prior art systems.

According to an embodiment said lower storage compartment is configured to allow input and/or output of the overhead frame from which the bulk bag is suspended through both the front side and a back side of the lower storage compartment.

This still further enhances efficiency and flexibility as input and output operations of suspended bulk bags can be handled at both the front and back side of the storage compartment.

According to the invention, the storage rack comprises for each storage compartment at least two side members extending along a height direction of the storage rack and positioned at both lateral sides of the storage compartment when viewed along a longitudinal direction of the storage rack, the storage compartment extending in between its lateral sides from the front side to the back side along a transversal direction transversal to the height direction and the longitudinal direction,
said lower storage compartment is configured to allow input and/or output, along the transversal direction, of the overhead frame from which the bulk bag is suspended.

This enables a clean and simple arrangement of the storage assembly.

According to the invention, the support comprises at least two side support members respectively attached to both lateral sides and configured such that the distance between both side support members along the longitudinal direction is smaller than the length of the overhead frame along the longitudinal direction when stored in the storage compartment.

In this way the support and overhead frame can be realised by means of a simple construction.

According to the invention, the at least two side support members of the lower storage compartment are positioned such that there is a predetermined clearance between the overhead frame and the upper storage compartment when the overhead frame is stored in the lower storage compartment.

This enables the possibility of movement of the overhead frame stored in the lower storage compartment from its support during an output operation and easy introduction during an input operation.

According to the invention, the predetermined clearance comprises a predetermined clearance along the height direction and/or the longitudinal direction between the overhead frame and the lateral sides of the upper storage compartment.

This enables the possibility of movement, such as lifting and/or shifting, of the overhead frame stored in the lower storage compartment from its support during an output operation and easy introduction during an input operation.

According to the invention, the lateral sides of the upper storage compartment are directly connected to the respective lateral sides of the lower storage compartment.

In this way the storage rack can be realised with a simple construction.

According to a further embodiment the storage compartment along the transversal direction extends along a transversal distance, such that a plurality of overhead frames can be arranged in the storage compartment sequentially along the transversal direction.

Such an arrangement allows for an increased flexibility with respect to input and output operations of the stored bulk bags and increases the efficient use of floor space the ration of floor space for a transport system with respect to the floor space for the storage rack is reduced.

According to a further embodiment the support is configured such that when supporting the overhead frame, the overhead frame can be shifted along the transversal direction. Optionally the support is configured such that at least one overhead frame, when supported on the support, is shifted along the transversal direction, when a further overhead frame is inputted along the transversal direction into storage compartment.

Such an embodiment is especially useful for use in storage assemblies storing bulk bags that preferably are processed on a first in first out basis, such as for example bulk bags comprising perishable goods.

According to a further embodiment the support comprises at least one linear member extending along the transversal direction.

In this way shifting along the transversal direction of the overhead frame is realised by means of a simple construction.

According to a further embodiment the storage assembly further comprises a transport system configured to transport the overhead frame from which a bulk bag is suspended to and from the storage rack, the transport system comprises at least one rack transporter configured to:
- move along the longitudinal direction and height direction of the rack and;
- to allow input and/or output of the overhead frame from which the bulk bag is suspended through the front side and/or the back side of the lower storage compartment.

Such a storage assembly does not only allow for efficient and flexible storage of the bulk bags, but also for a matching transport that does not require any operations to be performed on the storage rack or the bulk bag when inputting or outputting an overhead frame from which a bulk bag is suspended to the storage rack.

According to a further embodiment the transport system further comprises:
- at least one line transporter configured to move generally along the transverse direction at the height of the at least one storage rack, and
- a rotation device configured to exchange the overhead frame from which a bulk bag is suspended between the rack transporter and the line transporter after rotation of the overhead frame to their respective direction of movement.

Such a configuration still further optimizes usage of floor space and efficieny for both the transporting system as well as the storage rack, because these line transporters can generally serve a plurality rotation devices and thus a plurality of rack transporters of a plurality of storage racks and are able to do that in the most efficient way when moving transverse to the direction of motion of the rack transporters.

According to a second aspect of the invention there is provided a method of operating a storage assembly according to the first aspect of the invention, characterised in that the overhead frame from which the bulk bag is suspended is inputted and/or outputted through a front side of the lower storage compartment.

This allows for an efficient and flexible handling of input and output operations of suspended bulk bags.

According to an embodiment the overhead frame from which the bulk bag is suspended is inputted and/or outputted through both the front side and a back side of the lower storage compartment.

This allows for a further increase in flexibility and throughput as both the front side and back side are available for input and output operations.

### Brief Description of the Drawings

Figure 1 schematically illustrates a front view of a storage rack of a storage assembly according to the invention;
Figure 2 schematically illustrates a top view on a section of a storage compartment of the storage rack of Figure 1 during storage of an overhead frame from which a bulk bag is suspended.;
Figure 3 schematically illustrates a top view similar to Figure 2 during input and/or output of the overhead frame from which a bulk bag is suspended;
Figure 4 schematically illustrates a top view similar to Figure 2 of an alternative embodiment of the storage compartment;
Figure 5 schematically illustrates a storage assembly comprising a storage rack similar to the embodiments illustrated in Figures 1 to 4 and a transport system; and
Figure 6 schematically illustrates details of the transport system of Figure 5.

### Detailed Description of Embodiment(s)

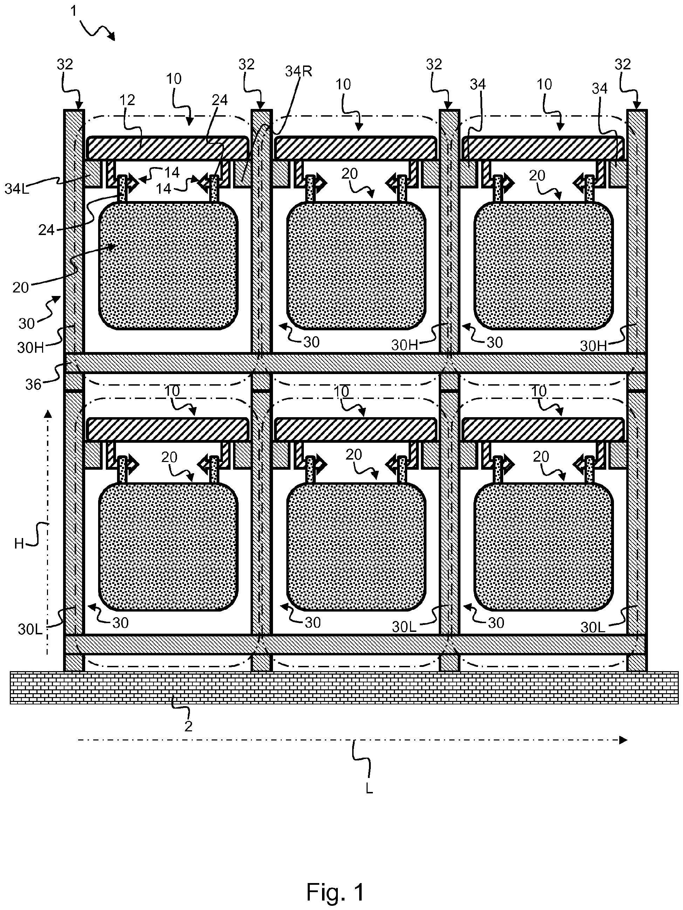

Figure 1 schematically illustrates a storage rack 1 of a storage assembly. It is clear that according to alternative embodiments the storage assembly could comprise a plurality of such storage racks 1. In general at least one such storage rack 1 must be provided. As shown the storage rack generally extends substantially horizontal along a longitudinal direction L and substantially vertical along a height direction H. This storage rack 1 comprises a plurality of storage compartments 30. In the embodiment of Figure 1, six such storage compartments 30 are shown in a three by two configuration, this means that there are two rows extending along the longitudinal direction L arranged on top of each other along the height direction. Each of these rows comprising three storage compartments arranged next to each other along the longitudinal direction L. It is clear that alternative arrangements and numbers of storage compartments could be available in such a storage rack 1, as long as in general there is at least one lower storage compartment 30L and upper storage compartment 30H. This upper storage compartment 30H being mounted on top of the lower storage compartment 30L.

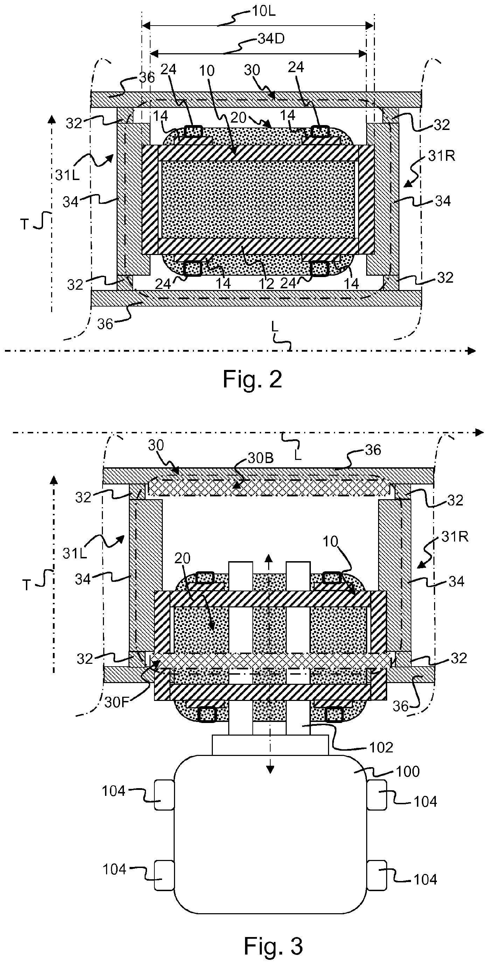

As shown in Figures 1 and 2, each storage compartment comprises four side members 32 at each of the corners of the storage compartment 30 when viewed along the height direction. These side members 32 are for example suitable profiled metal members or bars as generally known for use during the construction of such a storage rack 1. It is clear that alternative embodiments or arrangements of the side members 32 are possible, as long as in general there are provided at least two side members 32 that extend along the height direction H of the storage rack 1 and are positioned at both lateral sides 31 L, 31 R of the storage compartment 30, when viewed along a longitudinal direction L of the storage rack 1. This thus means at least one side member 32 at the left side 31 L and one at the right side 31 R as viewed in Figures 1 and 2. It is clear that according to specific embodiments the storage rack 1, as shown in Figures 1 and 2, further can comprises further members, such as for example the longitudinal member 36 as shown, which extends generally along the longitudinal direction L and structurally connects the side members 31 L, 31 R of the storage compartments, However, as will be explained in further detail below, such additional members should be positioned such that they do not interfere with the input and/or output of an overhead frame 10 from which a bulk bag 20 is suspended through the front side 30F of the lower storage compartment 30L.

As further shown in Figures 1 and 2, the storage compartment 30 extends in between its lateral sides 31 L, 31 R from a front side 30F to a back side 30B along a transversal direction T transversal to the height direction H and the longitudinal direction L. This thus means that the storage rack 1, that is arranged on a substantially horizontal floor area, extends longitudinally along the longitudinal direction L along generally vertical front sides 30F of the storage compartments 30. As shown in Figures 1 and 2, along these front sides 30B of the storage rack access is available to the storage compartments 30 for inputting or outputting an overhead frame 10 from which a bulk bag is suspended. As will be explained in further detail below inputting and outputting the overhead frame 10 from which the bulk bag 20 is suspended occurs generally along the transverse direction T.

As shown, each of these storage compartments 30 further comprises a support 34 on which the overhead frame 10 from which a bulk bag 20 is suspended can be supported during storage in the storage rack 1. The bulk bag 20 comprises four handles 24 for overhead suspension. The handles 24, for example being formed as loops of fabric or chains or any other suitable element that allows the bulk bag 20 to be suspended. The handles 24 are arranged substantially at the top side of the bulk bag 20. The overhead frame 10, as schematically shown in Figures 1 and 2, comprises, attached to a generally rectangular base frame 12, four handle attachments 14 that are able to releasably connect to the handles 24 of the bulk bag during overhead suspension. This means that the handles 24 of the bulk bag 20 can be attached these handle attachments 14, for example when the bulk bag is still empty, before being filled at a filling station and can also be released from these handle attachments 14, for example after the bulk bag 20 has been discharged at a discharge station. As schematically shown these handle attachments 14 can be embodied as suitable hooks, but any other suitable alternative could be used such as for example a releasable chain attachment, a carabiner, a releasable bar connection, etc. It is further clear that any other suitable plurality of handles 24 of the bulk bag 20 could be chosen, and equally any other suitable plurality of corresponding handle attachments 14 of the overhead frame 10. It is further also clear that the base frame 12 of the overhead frame 10, which is schematically shown to be substantially rectangular in shape and for example formed by means of welded metal profiles. It is clear that alternative embodiments of the overhead frame 10 are possible as long as in general it is suitable to be supported on the support 34 of the storage compartment 30.

According to the embodiment shown in Figures 1 and 2 the support 34 comprises at least two side support members 34L, 34R. The side support members 34L, 34R are respectively attached to both lateral sides 32L, 32R of the storage compartment 30. This means, as shown in the view of Figures 1 and 2, that one support member 34L is attached to the side members 32 at the left side 31 L of the storage compartment 30 and another support member 34R is attached to the side members 32 at the right side 31 R of the storage compartment 30. The support members 34L, 34R are for suitable example metal bars or profiles or any other suitable linear member that extends along the transversal direction T. Although a substantially continuous linear member is preferred as it allows for easy shifting of the overhead frame 10 on the support 34 during input or output operations, it is clear that according to alternative embodiments discontinuous or discrete elements could embody such a support, such as for example a suitably arranged plurality of projections from the sides 31 L, 31 R that project into the storage compartment 30 substantially along the longitudinal direction L. It is clear that, as shown, because the distance 34D between both side support members 34L and 34R along the longitudinal direction L is smaller than the length 10L of the overhead frame 10 along the longitudinal direction L, the overhead frame 10 can be securely supported on this support 34 when stored in the storage compartment 30. Both side support members 34L, 34R of the embodiment of Figures 1 and 2 are shown to be embodied as transverse members 34 of the storage rack 1 that are suitably attached, for example by means of a weld connection or bolt connection or any other suitable connection, to the side members 32 of the storage rack 1 and which project sufficiently into each of the storage compartments 30 along the longitudinal direction L. Alternative embodiments, for example in which the support 34 is formed by a distinct member being attached along a transverse member of the storage rack are also possible and make it for example possible to easily modify an existing storage rack with a minimal need for modifications to the members of the existing storage rack 1. Still further alternative embodiments of the support 34 are possible, for example supports that are embodied by means of members attached to or being part of the storage rack 1 that provide for a suitable indentation instead of a projection along the longitudinal direction L in which the overhead frame 10 can then be inserted when moved substantially along the transverse direction T.

The side support members 34L, 34R of the lower storage compartment 30L of the embodiment of Figures 1 are positioned such that there is a predetermined clearance between the overhead frame 10 and the upper storage compartment 30H. This means that when the overhead frame 10 is stored in the lower storage compartment 30L is not locked in by the upper storage compartment 30H. As shown, there is provided a predetermined clearance along the height direction H, which enables lifting of the overhead frame 10 from which the support 34 of the lower storage compartment 30L without requiring any manipulation or modification of the elements of the upper storage compartment 30H that is mounted on this lower storage compartment 30L. The ability to lift the overhead frame 10 from the support 34 eases the input into and output out of the storage compartment 30 as in this way friction is eliminated between the support 34 and the overhead frame 10 thus facilitating movement of the overhead frame 10 into or out of the storage compartment 30 substantially along the transverse direction T. Additionally there is also a predetermined clearance along the longitudinal direction L between the overhead frame 10 and the lateral sides 31 L, 31 R of the storage compartment 30 so that the overhead frame 10 can be manoeuvred easily during input and output operations reducing the risk of friction or collision with for example the vertical side members 32 of the storage rack 1. It is beneficial that the side members 32 of the upper storage compartment 30H do not interfere with an input and output operation of an overhead frame 10 in a lower storage compartment 30L on which it is mounted. Therefore, according to alternative embodiments, where the lateral sides of the upper storage compartment 30H would be arranged in more close proximity with the overhead frame 10 in the lower storage compartment 30L it is beneficial that there is sufficient clearance available between that overhead frame 10 and for example the side members 32 extending along the height direction H.

According to still further alternative embodiments instead of, or in combination with providing clearance between the overhead frame 10 and the members of the storage rack 1 in such a way that input and output operations of the overhead frame 10 of a lower storage compartment 30L can be effected efficiently without the need for manipulation of an upper storage compartment 30H arranged above it, there could be provided friction reducing elements, for example guide blocks or roller systems, etc. on the support 34 or in its vicinity to the members of the storage rack 1, to enable movement of the overhead frame 10 during input and output operations, substantially along the transverse direction T.

It is clear that further alternative embodiments of the storage rack 1, particularly the support 34 and the members of the lateral sides 31 L, 31 R are possible, as long as in general the lower storage compartment 30L is configured to allow input and/or output of the overhead frame 10 from which the bulk bag 20 is suspended through the front side 30F of the lower storage compartment 30L. It is further clear, as shown in the embodiment of Figures 1 and 2, that according to beneficial embodiments the lower storage compartment 30L is configured to allow input and/or output of the overhead frame 10 from which the bulk bag 20 is suspended through both the front side 30F and a back side 30B of the lower storage compartment 30L, as none of the members of the storage rack 1 block movement during the input and/or output operation, along the transversal direction T, of the overhead frame 10 from which the bulk bag 20 is suspended. This is advantageous as by the possibility of performing input and/or output operations both at the front side 30F and back side 30B of such a storage rack 1, the maximum frequency of possible input and output operations can be increased as such operations could concurrently take place at both these sides of the storage rack 1 without any risk of interference.

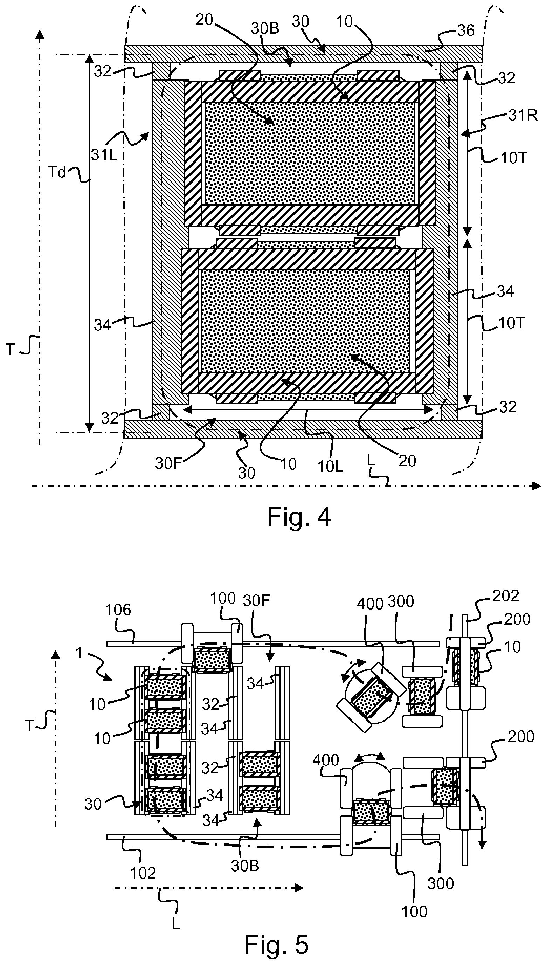

It is further also clear that, according to the embodiment shown in Figures 1 and 2, that the overhead frame 10 supported in a lower storage compartment 30L is freely movable as no members of the upper storage compartment 30H are supported on this overhead frame 10, thereby locking the overhead frame 10 in in such a way that it cannot be removed unless the upper storage compartment 30 is manipulated or removed first. More specifically, as shown, this is realised by directly connecting the lateral sides 31 L, 31 R of the upper storage compartment 30H to the respective lateral sides 31 L, 31 R of the lower storage compartment 30L. This means that the substantially vertically extending side members 32, as shown, are directly connected to each other, or according to alternative embodiments the side members 32 could comprise a continuous metal bar or profile extending along multiple storage compartments 30. It is of course also possible that the lateral sides comprise next to the side members 32 extending substantially vertical, suitable interconnection members or parts of longitudinally, diagonally or laterally extending members, as long as the lateral sides of the lower storage compartment 30L are continued into those of the upper storage compartment 30H in such a way that input and output operations of the overhead frame 10, especially along the transverse direction T or along the support remains possible without the need to manipulate or modify the upper storage department. Such an operation can for example be executed by means of a forklift like device 100 operated manually or automatically such as for example shown in Figure 3 or any other suitable transport system suitable to transport the overhead frame 10 from which a bulk bag 20 is suspended to and from the storage rack 1. Such a transport system could for example comprise one or more rack transporters 100 as shown. This rack transporter 100 can move, for example by suitable movement means such as steerable wheels 104 along the longitudinal direction L and for example by means of a forklift type carriage carrying lifting forks 102 along the height direction H of the storage rack 1 in order to reach a desired storage compartment 30. Additionally the rack transporter 100 is able to input and/or output the overhead frame 10 from which the bulk bag 20 is suspended through the front side 30F and/or the back side 30B of the lower storage compartment 30L, which can, in the example of a forklift be accomplished by means of the steerable wheels 104 driving the rack transporter 100 closer to the storage rack 1 generally along the transverse direction T when the lifting forks are positioned at the right storage compartment 30. It is clear that other suitable transport systems 100 could be used that could make use of other suitable lifting and movement devices, such as for example rail-type systems as will be discussed in more detail with reference to the embodiment of Figure 5.

According to the embodiment shown in Figure 4, the storage compartment 30, which is largely similar to the embodiment shown in Figures 1 and 2 and for which similar elements are referenced by means of the same reference signs, extends along the transversal direction T along a transversal distance Td, which is large enough such that two overhead frames 10 can be arranged in the storage compartment sequentially along the transversal direction T. This thus for example means that the transversal distance Td of the storage compartment must be large enough to accommodate twice the width 10T of the overhead frame 10. Also the support 34 must be suitably adapted to enable the support of both these overhead frames 10 when stored in the storage compartment 30. As shown this can be realised in a simple way by means of linear support members that extend along the transversal direction T. Such a support 34 also allows for shifting the overhead frame along the transversal direction T, inside the storage compartment 30, which is advantageous during an input or output operation, but also when rearranging the position of an overhead frame within such a storage compartment 30 that can hold a sequence of overhead frames 10 along the transverse direction T. It is clear that according to alternative embodiments storage racks 1 with storage compartments are possible that can hold a such a sequence of a plurality overhead frames 10 that is different from two, such as for example three, four, five etc.. This can be realised by dimensioning the storage compartment 30 along the transverse direction T and especially its support 34 so that it can support a plurality of such overhead frames 10 from which a bulk bag is suspended, or alternatively by arranging a plurality of storage racks 1 back to back such that their corresponding storage compartments 30 and the supports 34 thereof are aligned along the transversal direction T and allow shifting of the overhead frame 10 from the front side of the so combined storage rack to its back side.

Figure 5 shows an embodiment of the storage assembly in which there is available such a storage rack 1 in which in each storage compartment four overhead frames 10 from which a bulk bag 20 is suspended can be stored sequentially along the transversal direction T. The storage compartment 30 can be similarly constructed as that shown in Figure 4, but then suitably extended along the transversal direction T so that it can hold a sequence of four overhead frames 10. Alternatively two storage racks 1 similar as the embodiment of Figure 4 can be arranged back to back, or still further alternative embodiments are possible in which the storage compartment 30 and its associated support 30 are suitably formed for holding a sequence of four such overhead frames 10. The storage assembly further also comprises a transport system as discussed with reference to Figure 3. However according to the embodiment of Figure 5, the rack transporter 100 is a rail type system movable along a rail 106 to move along the longitudinal direction L. Additionally the rack transporter 100 comprises suitable means such as a lifting arrangement that allows for movement of an overhead frame along the height direction H of the storage rack. As shown there is arranged such a rack transporter 100 at both the front side 30F and the back side 30B of the lower storage compartment 30L. The rack transporter 100 in this way thus comprises a satellite system that can position an overhead frame 10 at any desired storage compartment for an input or output operation.

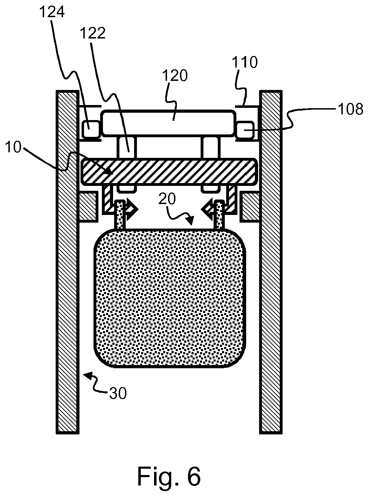

In order to enable shifting of the overhead frame 10 along the transverse direction T, during an input or output operation past the front or back side of the storage compartment or inside the storage compartment to any desired position on the support along the transverse direction T, the rack transporter 100 could further be provided with a shuttle 120, as shown in Figure 6. Such a shuttle 120, can comprise lifting means for releasably lifting the overhead frame 10. The shuttle can be suitably positioned by the satellite system of the rack transporter 100 at and introduced into a suitable shuttle guide 110, for example a suitable linear support extending generally above the support 34 for the overhead frame. Once inside the storage compartment the shuttle 120 can than transport the lifted overhead frame 10 along the transverse direction T, for example by suitable movement means 124 such as controllable wheels that move in the shuttle guide 110. When the suitable position along the transverse direction is reached the lifting device 122 of the shuttle 120 could lower the overhead frame 10 until it is supported on support 34 and release it thus ending the input operation. It is clear that such a shuttle 120 can perform the same shifting operation during an output operation by first lifting a supported overhead frame 10 and then transporting it to the satellite system of the rack transporter 100, or when repositioning an overhead frame 10 along the transverse direction T inside the storage compartment 30.

It is clear that in this way the storage assembly enables various methods of operating the storage assembly that are not possible in prior art storage racks in with suspended storage of bulk bags, such as for example a First In First Out or FIFO scheme which is beneficial for handling storage of bulk bags comprising perishable goods. According to such a scheme each bulk bag inputted into a storage compartment 30 along the front side 30F is arranged as close as possible to the back side 30B as the sequence allows. This then enables efficient removal of the bulk bags from the back side 30F in the sequence in which they were introduced. Additionally repositioning operations could be performed on the bulk bags that are present inside the storage compartment for shifting this sequence as much as possible towards the back side 30B so that they can be outputted most efficiently and freeing space for the input of new overhead frames along the front side 30F. It is clear that alternative embodiments are possible for moving the overhead frames along the transversal direction T inside the storage compartment 30, and when the support 34 or the overhead frame 10 comprises friction reducing elements such as for example rollers this can even be realised without the need for a lifting arrangement or even a shuttle 120 as described above. The controlled shifting could then for example be realised by means of arranging the support 34 suitably angled with respect to the horizontal direction, such that a movement along the transverse direction T results from the gravity acting on the overhead frame 10 from which a bulk bag is suspended. Control of the range of that movement could then for example be refined by providing a suitable number of controllable stops along the transverse direction T inside the storage compartment such that the movement of the overhead frame 10 can be ended at predetermined positions inside the storage compartment. It is further also clear that alternative methods of operating the storage assembly are possible, for example where input and output operations are only performed at the front side 30F of the storage compartment 30 of the storage racks. It is further also clear that although only one storage rack 1 is shown in Figure 5, according to alternative embodiments the storage assembly could comprise a plurality of such storage racks 1, preferably generally arranged parallel to each other and the longitudinal direction L, leaving suitable corridors in between them for operating associated rack transporters 100.

In order to still further enhance the throughput of such a storage system as further shown in Figure 5, the transport system of the storage assembly could further comprise at least one line transporter 200, which are schematically shown to be a rail type system moving along the rail 202. These line transporters 200 can for example operate to transport an overhead frame 10 between the storage area where the storage racks 1 are arranged to other areas such as a filling area with filling stations or a discharge area with discharge stations for the bulk bags. It is advantageous for these line transporters 200 to move generally along the transverse direction T next to the storage rack 1 so as to be able to reach the desired rack transporter 100 serving a desired storage rack 1 with the desired storage compartment 30 efficiently. As indicated with the stripe dot arrow line, during a transport operation the line transporter 200 in the embodiment according to Figure 5 when arriving next to the desired storage rack 1 exchanges the overhead frame 10 with a buffer device 300. The buffer device 300 temporarily stores the overhead frame 10 until the downstream rotation device 400 is positioned to accept this overhead frame 10. Then buffer device transfers this overhead frame 10 with the rotation device 400, which subsequently rotates the overhead frame 10 over about 90° so that it is suitably positioned for exchange with the rack transporter 100, which subsequently positions it in the storage rack 1 through its front side 30F, thus completing the input operation.

As shown a further rack transporter 100 is arranged at the back side 30B of the storage rack 1, for example for performing output operations by outputting a desired overhead frame 10 from a desired storage compartment 30. As shown schematically the rack transporter 100 then transfers this overhead frame 10 to a further rotation device 400 that turns it 90°, transfers it to a further buffer device 300 which transfers it upon arrival of a line transporter 200 for further transportation, for example to a discharge area comprising a discharge station. It is clear that alternative embodiments of the transportation system are possible, more specifically the presence, arrangement, number and embodiments of the rotation devices 400, buffer devices 300, line transporters 200 and rack transporters could differ. For example according to alternative embodiments the exchange of the overhead frame 10 from which a bulk bag 20 is suspended by the rotation device 400 between the rack transporter 100 and the line transporter 200 after rotation of the overhead frame 10 to their respective direction of movement could be absent, as for example such a rotation is not required because of the direction of movement or because the rack transporter 100 or line transporter 200 are able to perform such a rotation themselves. Equally according to alternative embodiments no buffer devices 300 or additional buffer devices 300 could be present, in function of the necessary throughput that is to be realised with the transport system.

For example, according to alternative embodiments the storage racks 1 with storage compartments are possible that can hold a sequence of a plurality overhead frames 10 that cooperate with a rack transporter 100 such as for example shown in Figure 3, as an automated or manually operated forklift like device 100. Such a setup is most suited when the number of sequential overhead frames 10 in a storage compartment of the storage rack is limited to for example two, three or four, which remain reachable, even from one side when making use of forklift like devices comprising for example telescopic forks. According to a particular selection of such embodiments of the storage assembly, the support 34 prevents shifting of the overhead frame 10 along the transversal direction T beyond a predetermined movement limit. For example in an embodiment similar to the embodiment displayed in Figure 4, stops could be arranged near the centre of the support 34 along the transversal direction T, that prevent an overhead frame 10 introduced along the front side 30F from being shifted beyond this movement limit. The same then holds for an overhead frame 10 introduced along the back side 30B. Such a setup for example avoids a collision of both these overhead frames 10 and prevents the overhead frame introduced along the front side to influence the position of the overhead frame introduced along the back side and vice versa. It is clear that according to further embodiments additional or other movement limits are possible, such as for example by providing a suitable stop that prevents overhead frames 10, or a sequence of overhead frames from being inadvertently shifted beyond the front and/or back side of the storage compartment 30, without for example an additional lifting motion from the rack transporter 100 which for example lifts the overhead frame 10 over a corresponding stop on the support 34.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope as defined by the appended claims.

## Claims

1. A storage assembly comprising at least one storage rack (1) and a plurality of overhead frames (10), said storage rack (1) comprising a plurality of storage compartments (30), each of these storage compartments (30) comprising a support (34) configured to support an overhead frame (10) from which a bulk bag (20) is suspended, said bulk bag (20) comprising a plurality of handles (24) for overhead suspension, said overhead frame (10) comprising a corresponding plurality of handle attachments (14) configured to releasably connect to the handles (24) of the bulk bag during overhead suspension; said plurality of storage compartments (30) comprising at least one lower storage compartment (30L) and upper storage compartment (30H), the upper storage compartment (30H) being mounted on top of the lower storage compartment (30L), said lower storage compartment (30L) being configured to allow input and/or output of the overhead frame (10) from which the bulk bag (20) is suspended through a front side (30F) of the lower storage compartment (30L),
wherein the storage rack (1) comprises for each storage compartment at least two side members (32) extending along a height direction (H) of the storage rack (1) and positioned at both lateral sides (31 L, 31 R) of the storage compartment (30) when viewed along a longitudinal direction (L) of the storage rack (1), the storage compartment (30) extending in between its lateral sides from the front side (30F) to the back side (30B) along a transversal direction (T) transversal to the height direction (H) and the longitudinal direction (L),
said lower storage compartment (30L) is configured to allow input and/or output, along the transversal direction (T), of the overhead frame (10) from which the bulk bag (20) is suspended, and
wherein the support (34) comprises at least two side support members (34L, 34R) respectively attached to both lateral sides (31 L, 31 R) and configured such that the distance (34D) between both side support members along the longitudinal direction (L) is smaller than the length (10L) of the overhead frame (10) along the longitudinal direction (L) when stored in the storage compartment (30), and
wherein the at least two side support members (34L, 34R) of the lower storage compartment (30L) are positioned such that there is a predetermined clearance between the overhead frame (10) and the upper storage compartment (30H) when the overhead frame (10) is stored in the lower storage compartment (30L), and wherein the predetermined clearance comprises a predetermined clearance along the height direction (H) and/or the longitudinal direction (L) between the overhead frame (10) and the lateral sides (31 L, 31 R) of the upper storage compartment (30H), and
wherein the lateral sides (31 L, 31 R) of the upper storage compartment (30H) are directly connected to the respective lateral sides (31 L, 31 R) of the lower storage compartment (30L).

2. A storage assembly according to claim 1, **characterised in that** said lower storage compartment (30L) is configured to allow input and/or output of the overhead frame (10) from which the bulk bag (20) is suspended through both the front side (30F) and a back side (30B) of the lower storage compartment (30L).

3. A storage assembly according to any of the claims 1 or 2, **characterised in that** the storage compartment (30) along the transversal direction (T) extends along a transversal distance (Td), such that a plurality of overhead frames (10) can be arranged in the storage compartment sequentially along the transversal direction (T).

4. A storage assembly according to claim 3, **characterised in that** the support (34) is configured such that when supporting the overhead frame (10), the overhead frame (10) can be shifted along the transversal direction (T).

5. A storage assembly according to claim 4, **characterised in that** the support (34) is configured such that at least one overhead frame (10), when supported on the support (34), is shifted along the transversal direction (T), when a further overhead frame (10) is inputted along the transversal direction (T) into storage compartment (30).

6. A storage assembly according to any of the claims, **characterised in that** the support (34) comprises at least one linear member extending along the transversal direction (T).

7. A storage assembly according to any of the preceding claims, **characterised in that** the storage assembly further comprises a transport system (100, 200) configured to transport the overhead frame (10) from which a bulk bag (20) is suspended to and from the storage rack (1), the transport system comprises at least one rack transporter (100) configured to:
- move along the longitudinal direction (L) and height direction (H) of the storage rack (1) and;
- to allow input and/or output of the overhead frame (10) from which the bulk bag (20) is suspended through the front side (30F) and/or the back side (30B) of the lower storage compartment (30L).

8. A storage assembly according to claim 7, **characterised in that** the transport system further comprises:
- at least one line transporter (200) configured to move generally along the transverse direction (T) next to the storage rack (1), and
- a rotation device (400) configured to exchange the overhead frame (10) from which a bulk bag (20) is suspended between the rack transporter (100) and the line transporter (200) after rotation of the overhead frame (10) to their respective direction of movement.

9. A method of operating a storage assembly according to any of the preceding claims, **characterised in that** the overhead frame (10) from which the bulk bag (20) is suspended is inputted and/or outputted through a front side (30F) of the lower storage compartment (30L).

10. A method of operating a storage assembly according to claim 9, when dependent on claim 2, **characterised in that** the overhead frame (10) from which the bulk bag (20) is suspended is inputted and/or outputted through both the front side (30F) and a back side (30B) of the lower storage compartment (30L).

## Patentansprüche

1. Aufbewahrungseinheit, die mindestens ein Aufbewahrungsregal (1) und eine Vielzahl von Überkopfgestellen (10) umfasst, wobei das Aufbewahrungsregal (1) eine Vielzahl von Aufbewahrungsfächern (30) umfasst, wobei jedes dieser Aufbewahrungsfächer (30) eine Stütze (34) umfasst, die konfiguriert ist, um ein Überkopfgestell (10), an das ein Transportsack (20) aufgehängt ist, zu stützen, wobei der Transportsack (20) eine Vielzahl von Griffen (24) zur Überkopfaufhängung umfasst, wobei das Überkopfgestell (10) eine entsprechende Vielzahl von Griffbefestigungen (14) umfasst, die konfiguriert ist, um sich lösbar mit den Griffen (24) des Transportsacks während der Überkopfaufhängung zu verbinden;
wobei die Vielzahl von Aufbewahrungsfächern (30) mindestens ein unteres Aufbewahrungsfach (30L) und ein oberes Aufbewahrungsfach (30H) umfasst, wobei das obere Aufbewahrungsfach (30H) oben auf dem unteren Aufbewahrungsfach (30L) angebracht ist,
wobei das untere Aufbewahrungsfach (30L) konfiguriert ist, um eine Eingabe und/oder Ausgabe des Überkopfgestells (10), an dem der Transportsack (20) aufgehängt ist, durch eine Vorderseite (30F) des unteren Aufbewahrungsfaches (30L) zu ermöglichen,
wobei das Aufbewahrungsregal (1) für jedes Aufbewahrungsfach mindestens zwei Seitenelemente (32) umfasst, die sich entlang einer Höhenrichtung (H) des Aufbewahrungsregals (1) erstrecken und an beiden lateralen Seiten (31 L, 31 R) des Aufbewahrungsfaches (30), wenn es in einer Längsrichtung (L) des Aufbewahrungsregals (1) betrachtet wird, positioniert sind, wobei sich das Aufbewahrungsfach (30) zwischen seinen lateralen Seiten von der Vorderseite (30F) zur Rückseite (30B) entlang einer Querrichtung (T), die quer zur Höhenrichtung (H) und zur Längsrichtung (L) verläuft, erstreckt,
wobei das untere Aufbewahrungsfach (30L) konfiguriert ist, um eine Eingabe und/oder die Ausgabe des Überkopfgestells (10), an dem der Transportsack (20) aufgehängt ist, entlang der Querrichtung (T) zu ermöglichen, und
wobei die Stütze (34) mindestens zwei Seitenstützelemente (34L, 34R) umfasst, die jeweils an beiden lateralen Seiten (31 L, 31 R) befestigt und so konfiguriert sind, dass der Abstand (34D) zwischen beiden Seitenstützelementen entlang der Längsrichtung (L) kleiner als die Länge (10L) des Überkopfgestells (10) entlang der Längsrichtung (L) ist, wenn es im Aufbewahrungsfach (30) aufbewahrt wird, und
wobei die mindestens zwei Seitenstützelemente (34L, 34R) des unteren Aufbewahrungsfaches (30L) so positioniert sind, dass ein vorbestimmtes Spiel zwischen dem Überkopfgestell (10) und dem oberen Aufbewahrungsfach (30H) vorhanden ist, wenn das Überkopfgestell (10) im unteren Aufbewahrungsfach (30L) aufbewahrt wird, und
wobei das vorbestimmte Spiel ein vorbestimmtes Spiel entlang der Höhenrichtung (H) und/oder der Längsrichtung (L) zwischen dem Überkopfgestell (10) und den lateralen Seiten (31 L, 31 R) des oberen Aufbewahrungsfaches (30H) umfasst, und wobei die lateralen Seiten (31 L, 31 R) des oberen Aufbewahrungsfaches (30H) direkt mit den jeweiligen lateralen Seiten (31L, 31 R) des unteren Aufbewahrungsfaches (30L) verbunden sind.

2. Aufbewahrungseinheit nach Anspruch 1, **dadurch gekennzeichnet, dass** das untere Aufbewahrungsfach (30L) konfiguriert ist, um eine Eingabe und/oder Ausgabe des Überkopfgestells (10), an dem der Transportsack (20) aufgehängt ist, durch die Vorderseite (30F) sowie die Rückseite (30B) des unteren Aufbewahrungsfaches (30L) zu ermöglichen.

3. Aufbewahrungseinheit nach einem der Ansprüche 1 oder 2, **dadurch gekennzeichnet, dass** sich das Aufbewahrungsfach (30) entlang der Querrichtung (T) entlang eines Querabstands (Td) erstreckt, sodass eine Vielzahl von Überkopfgestellen (10) nacheinander entlang der Querrichtung (T) im Aufbewahrungsfach angeordnet werden kann.

4. Aufbewahrungseinheit nach Anspruch 3, **dadurch gekennzeichnet, dass** die Stütze (34) so konfiguriert ist, dass beim Stützen des Überkopfgestells (10) das Überkopfgestell (10) entlang der Querrichtung (T) verschoben werden kann.

5. Aufbewahrungseinheit nach Anspruch 4, **dadurch gekennzeichnet, dass** die Stütze (34) so konfiguriert ist, dass mindestens ein Überkopfgestell (10), wenn es auf der Stütze (34) aufliegt, entlang der Querrichtung (T) verschoben wird, wenn ein weiteres Überkopfgestell (10) entlang der Querrichtung (T) in das Aufbewahrungsfach (30) eingegeben wird.

6. Aufbewahrungseinheit nach einem der Ansprüche, **dadurch gekennzeichnet, dass** die Stütze (34) mindestens ein lineares Element umfasst, das sich entlang der Querrichtung (T) erstreckt.

7. Aufbewahrungseinheit nach einem der vorhergehenden Ansprüche, **dadurch gekennzeichnet, dass** die Aufbewahrungseinheit ferner ein Transportsystem (100, 200) umfasst, das konfiguriert ist, um das Überkopfgestell (10), an dem ein Transportsack (20) aufgehängt ist, zum oder vom Aufbewahrungsregal (1) zu transportieren, wobei das Transportsystem mindestens einen Regaltransporter (100) umfasst, der konfiguriert ist, um:
- sich entlang der Längsrichtung (L) und der Höhenrichtung (H) des Aufbewahrungsregals (1) zu bewegen; und
- eine Eingabe und/oder Ausgabe des Überkopfgestells (10), an dem der Transportsack (20) aufgehängt ist, durch die Vorderseite (30F) und/oder die Rückseite (30B) des unteren Aufbewahrungsfaches (30L) zu ermöglichen.

8. Aufbewahrungseinheit nach Anspruch 7, **dadurch gekennzeichnet, dass** das Transportsystem ferner Folgendes umfasst:
- mindestens einen Linientransporter (200), der konfiguriert ist, um sich allgemein entlang der Querrichtung (T) neben dem Aufbewahrungsregal (1) zu bewegen, und
- eine Drehvorrichtung (400), die konfiguriert ist, um das Überkopfgestell (10), an dem ein Transportsack (20) aufgehängt ist, zwischen dem Regaltransporter (100) und dem Linientransporter (200) nach Drehung des Überkopfgestells (10) in deren jeweilige Bewegungsrichtung zu drehen.

9. Verfahren zum Betreiben einer Aufbewahrungseinheit nach einem der vorhergehenden Ansprüche, **dadurch gekennzeichnet, dass** das Überkopfgestell (10), an dem der Transportsack (20) aufgehängt ist, durch eine Vorderseite (30F) des unteren Aufbewahrungsfaches (30L) eingegeben und/oder ausgegeben wird.

10. Verfahren zum Betreiben einer Aufbewahrungseinheit nach Anspruch 9 in Abhängigkeit von Anspruch 2, **dadurch gekennzeichnet, dass** das Überkopfgestell (10), an dem der Transportsack (20) aufgehängt ist, durch die Vorderseite (30F) sowie eine Rückseite (30B) des unteren Aufbewahrungsfaches (30L) eingegeben und/oder ausgegeben wird.

## Revendications

1. Ensemble de stockage comprenant au moins un râtelier de rangement (1) et une pluralité de cadres de suspension (10), ladite étagère de rangement (1) comprenant une pluralité de compartiments de stockage (30), chacun de ces compartiments de stockage (30) comprenant un support (34) configuré pour supporter un cadre de suspension (10) auquel est suspendu un sac de vrac (20), ledit sac de vrac (20) comprenant une pluralité de poignées (24) pour la suspension, ledit cadre de suspension (10) comprenant une pluralité correspondante de fixations à poignée (14) configurées pour se raccorder, de façon amovible, aux poignées (24) du sac de vrac au cours de la suspension ; ladite pluralité de compartiments de stockage (30) comprenant au moins un compartiment de stockage inférieur (30L) et un compartiment de stockage supérieur (30H), le compartiment de stockage supérieur (30H) étant monté au-dessus du compartiment de stockage inférieur (30L), ledit compartiment de stockage inférieur (30L) étant configuré pour permettre l'entrée et/ou la sortie du cadre de suspension (10) auquel le sac de vrac (20) est suspendu à travers un côté antérieur (30F) du compartiment de stockage inférieur (30L),
le râtelier de rangement (1) comprenant, pour chaque compartiment de stockage, au minimum deux éléments latéraux (32) s'étendant dans le sens de la hauteur (H) du râtelier de rangement (1) et positionné sur les deux côtés latéraux (31 L, 31 R) du compartiment de stockage (30) vus dans un sens longitudinal (L) du râtelier de rangement (1), le compartiment de stockage (30) s'étendant entre ses côtés latéraux du côté antérieur (30F) au côté postérieur (30B) dans le sens transversal (T), transversal au sens de la hauteur (H) et au sens longitudinal (L),
ledit compartiment de stockage inférieur (30L) étant configuré pour permettre l'entrée et/ou la sortie dans le sens transversal (T) du cadre de suspension (10) auquel le sac de vrac (20) est suspendu, et
le support (34) comprenant au moins deux supports latéraux (34L, 34R) fixés respectivement sur les deux côtés latéraux (31 L, 31 R) et configurés de sorte que la distance (34D) entre les deux supports latéraux dans le sens longitudinal (L) soit inférieure à la longueur (10L) du cadre de suspension (10) dans le sens longitudinal (L), lors de son stockage dans le compartiment de stockage (30), et
les au moins deux supports latéraux (34L, 34R) du compartiment de stockage inférieur (30L) étant positionnés de façon à assurer la présence d'un dégagement prédéterminé entre le cadre de suspension (10) et le compartiment de stockage supérieur (30H) lorsque le cadre de suspension (10) est rangé dans le compartiment de stockage inférieur (30L), et
le dégagement prédéterminé comprenant un dégagement prédéterminé dans le sens de la hauteur (H) et/ou dans le sens longitudinal (L) entre le cadre de suspension (10) et les côtés latéraux (31 L, 31 R) du compartiment de stockage supérieur (30H),
et
les côtés latéraux (31 L, 31 R) du compartiment de stockage supérieur (30H) étant connectés directement aux côtés latéraux respectifs (31 L, 31 R) du compartiment de stockage inférieur (30L).

2. Ensemble de stockage selon la revendication 1, **caractérisé en ce que** ledit compartiment de stockage inférieur (30L) est configuré pour permettre l'entrée et/ou la sortie du cadre de suspension (10) auquel le sac de vrac (20) est suspendu à travers le côté antérieur (30F) et un côté postérieur (30B) du compartiment de stockage inférieur (30L).

3. Ensemble de stockage selon une quelconque des revendications 1 ou 2, **caractérisé en ce que** le compartiment de stockage (30) dans le sens transversal (T) s'étend sur une distance transversale (Td), de sorte qu'une pluralité de cadres de suspension (10) puisse être agencée dans le compartiment de stockage en séquence dans le sens transversal (T).

4. Ensemble de stockage selon la revendication 3, **caractérisé en ce que** le support (34) est configuré de sorte que lorsqu'il supporte le cadre de suspension (10), le cadre de suspension (10) peut être déplacé dans le sens transversal (T).

5. Ensemble de stockage selon la revendication 4, **caractérisé en ce que** le support (34) est configuré de sorte que lorsqu'il est supporté sur le support (34), au moins un cadre de suspension (10) est déplacé dans le sens transversal (T), lors de l'introduction d'un autre cadre de suspension (10), dans le sens transversal (T), dans le compartiment de stockage (30).

6. Ensemble de stockage selon une quelconque des revendications, **caractérisé en ce que** le support (34) comprend au moins un élément linéaire s'étendant dans le sens transversal (T).

7. Ensemble de stockage selon une quelconque des revendications, **caractérisé en ce que** l'ensemble de stockage comprend en outre un système de transport (100, 200) configuré pour transporter le cadre de suspension (10) auquel le sac de vrac (20) est suspendu au le râtelier de rangement (1), et sur celui-ci, le système de transport comprenant au moins un transporteur de râtelier (100) configuré pour :
- se déplacer dans le sens longitudinal (L) et de la hauteur (H) du râtelier de rangement (1) ; et
- permettre l'entrée et/ou la sortie du cadre de suspension (10) auquel le sac de vrac (20) est suspendu par le côté antérieur (30F) et/ou le côté postérieur (30B) du compartiment de stockage inférieur (30L).

8. Ensemble de stockage selon la revendication 7, **caractérisé en ce que** le système de transport comprend en outre :
- au moins un transporteur de ligne (200) configuré pour se déplacer d'une manière générale dans le sens transversal (T) à côté du râtelier de rangement (1), et
- un dispositif de rotation (400) configuré pour échanger le cadre de suspension (10) auquel le sac de vrac (20) est suspendu entre le transporteur de râtelier (100) et le transporteur de ligne (200) après la rotation du cadre de suspension (10) dans sa direction de déplacement respective.

9. Méthode d'utilisation d'un ensemble de stockage selon une quelconque des revendications précédentes, **caractérisée en ce que** le cadre de suspension (10) auquel le sac de vrac (20) est suspendu est entré et/ou sorti à travers un côté antérieur (30F) du compartiment de stockage inférieur (30L).

10. Méthode d'utilisation d'un ensemble de stockage selon la revendication 9, lorsqu'elle est tributaire de la revendication 2, **caractérisée en ce que** le cadre de suspension (10) auquel le sac de vrac (20) est suspendu est entré et/ou sorti à travers à la fois le côté antérieur (30F) et un côté postérieur (30B) du compartiment de stockage inférieur (30L).
